# EUROPEAN PATENT SPECIFICATION

(11) **EP 2 177 351 B1**
(45) Date of publication and mention of the grant of the patent: **01.01.2014**
(21) Application number: 09172948.3
(22) Date of filing: 13.10.2009
(51) Int. Cl.: B32B 5/26

(54) **Multilayer textile material**
Mehrschichtiges Textilmaterial
Matériau textile multicouche

(30) Priority: 14.10.2008 IT MI20081818
(43) Date of publication of application: 21.04.2010
(73) Proprietor: Moretti, Andrea, 16167 Genova (IT)
(72) Inventor: Moretti, Andrea, 16167 Genova (IT)
(74) Representative: Natali, Dario

(56) References cited:
- WO-A-01/85446
- WO-A-99/11209
- GB-A- 1 398 407
- US-A- 1 924 935
- US-A- 4 583 247
- US-A- 5 038 447
- US-B1- 7 361 403

## Description

The present invention refers to a multilayer material for textile use comprising an outer covering of substantially transparent polymer material and an inner filling consisting of fibres, natural and non natural, in the form of "tops" and/or a web. This textile product is particularly suitable to be used in the clothing sector, as well as in the accessories sector, in the furnishing sector, in the household linen sector, in the underwear sector, in the automotive industry, etc.

The present invention also refers to a manufacturing method for such a textile product.

Multilayer materials, according to the type of layers of which they are composed, are used in countless sectors such as, for example, clothing, household linen etc., thanks to the fact that they combine all the properties of the individual materials of which they are made up. Despite this, they can present some drawbacks. For example, in the clothing sector soft materials are widely used, formed, for example, of an outside in nylon fabric and an inner filling consisting of duck down. Alternatively, the inner filling can be formed of synthetic materials in the form of wadding, such as polyester, these also endowed with softness. However, these types of multilayer, if they have a duck down filling, present an unpleasant loss of feathers towards the outside. Furthermore, since duck down gives rise to allergy problems, any filling thus formed must be pretreated before being used in the manufacture of articles of clothing. Moreover, multilayer materials having the fillings as described above prove bulky because they generally appear in a "puffed up" form. The same problems occur in the case of bed covers like bed quilts. Thus, despite their water repellence and high heat insulating capacity, these multilayers prove unsuitable for particular uses, for example, in the production of technical articles that require both a high heat insulating capacity and also a non "puffed up" form because they must be close-fitting clothes with little bulk.

Object of the present invention is to find an alternative material to multiplayer materials, for example the heat insulating materials used in the clothing sector, that is soft, light, non allergenic, not bulky, with good mechanical strength, possibly water repellent and with heat insulating properties, eliminating the drawbacks of the prior art, and that is also highly aesthetically pleasing.

This object is achieved in accordance with the invention with the multilayer textile material having the characteristics listed in appended independent claim 1.

Advantageous embodiments of the invention are apparent from the dependent claims.

A further object is that of providing a process for preparing said textile material that is simple and practical

This object is achieved with the process having the characteristics listed in appended independent claim 9.

The quilted multilayer textile material according to the invention comprises an essentially transparent outer covering formed by a polymer material and an inner filling for said casing consisting of textile fibres, natural or otherwise, wherein said fibres are in the form of "tops" and/or web, optionally matted.

Said outer covering is formed of two cloths, an outer one and an inner one, which enclose the fibres in the form of tops and/or a web as in a bag: said tops are therefore sandwiched between the two cloths.

In the present invention what is meant by "tops" and web is two of the specific physical structures in which non woven textile fibres can be presented depending upon how the staple has been processed.

"Web" (carded web) stands for a fibrous material deriving from the carding stage of textile staple fibres. Said web is also indicated in the art by the term "carded web" or "carded sliver". Carding is a process that is carried out using rotating cylinders provided with curved metal tips which raise the fluff of the staple fibre at the same time eliminating impurities.

The fibre webs appear as flat textile structures whose cohesion is generally due to the each single staple fibre's own adhesive power after they have been subjected to carding. The fibres in said webs are generally twisted or bound to one another and not aligned with one another.

The carded web generally has a thickness of at least 0.5 cm.

It is also possible to use as "web" the material deriving from carding of the tops.

What is meant by "top(s)" is a mat of fibres aligned with each other deriving from the stage of combing of the above defined carded web. What is meant by combing is the process whereby special machines provided with combs smooth the fibres of the carded web and lay them parallel in the direction of the machine, producing a combed sliver, also defined as a top, which proves more homogeneous and less woolly than its precursor, the carded sliver. The top is often also identified by the term "sliver".

In tops the fibres are thus essentially parallel, and prove physically more orderly than the fibres contained in carded webs and in so-called "nonwoven" fabrics but they are less bound to one another. For this reason slight twisting is applied to the tops to give the combed fibres a minimum of cohesion. The mat of tops is generally cylindrical in shape, even if it can present in the form of long slivers, with a regular section, of fibres of discontinuous length and substantially parallel, slightly twisted.

The fibres in the above described forms of "tops" and web do not have the mechanical consistency of a yarn, a woven material or a nonwoven fabric but are extremely soft and light and the escape of fibre fibrils is considerably reduced compared with staples of the same fibre.

Said tops and webs, even if they consist of nonwoven fibres, are different from the materials normally defined as nonwoven fabrics.

In fact, in nonwoven fabric or materials, the fibre is transformed into fabric by subjecting the carded web to further cohesioning processes such as mechanical needle punching or hydroentangling. In fact the processes of carding and combing alone are not sufficient to transform the fibres into fabrics or nonwoven fabrics since they do not provide the fibres with sufficient mechanical cohesion as necessary for nonwoven fabrics.

Furthermore, said tops and web are different from what is generally indicated as padding in that padding has a very "puffed up" appearance, unlike webs and tops, in that it serves as stuffing to fill mattresses and other parts to be filled. In fact padding is a synthetic fabric formed by a mass of fibres which give a lot of volume, much more than webs and tops.

The material of the fibre used in the tops and/or web which go to make up the filling can be chosen from natural fibres, non natural fibres like synthetic fibres and artificial fibres, or mixtures thereof, which can be presented in the form of tops and/or a web. Tops and/or a web of natural fibres are preferably used.

Sheep wool, goat wool, Geelong wool, merino wool, cashmere, alpaca, mohair, angora, cotton, linen, silk, hemp etc. can be cited as examples of natural fibres. Geelong wool means the most prized part of sheep wool and represents the so-called "hair".

Viscose, rayon etc. can be cited as examples of artificial fibres.

The same fibres described later for the outer covering can be used as synthetic fibres.

It is also possible to use as filling "tops" or webs of a blend of two or more fibres, natural or non natural, in an intimate mixture.

What is meant herein by "intimate mixture" is the mixing of staples deriving from fibres of different materials.

When fibres in the form of a web are used for the filling, it is possible to place the carded webs one on top of the other in a series of layers, even of fibres differing from one another. The final thickness of the multilayer material is a function of the number of layers.

The "tops" and/or webs used in the present invention can be dyed with chemical or natural dyes or can maintain their natural colour.

As stated above, the tops and/or webs used in the textile material of the present invention can also be matted.

What is meant herein by "matted tops or webs" is webs or tops subjected to a matting treatment such as, for example, machine washing at a temperature of 40°C or higher, generally 70°C, which causes a shortening of the length of the fibres and consequently a slight decrease in the initial softness of the fibres but a greater mechanical compactness due to sticking together of the fibres.

What is meant herein by "matting" is all those treatments of the fibres in hot solutions, above 40°C, which cause fulling of the fibres and/or shortening thereof. Said matting can also be obtained during the dying process of the textile material of the present invention as will be explained later in detail. In fact, during dying the fibres of the articles are subjected to boiling in the dying solution at a temperature of 95°.

The matted webs or tops are also endowed with heat insulating properties, softness, and no "puffed up" appearance, similarly to non matted webs, but they display a greater mechanical strength.

The outer covering consists of cloths of essentially transparent polymer material.

What is meant herein by "essentially transparent" covering is those coverings that do not provide complete visual covering of the filling below but allow the existence of said filling to be perceived visually. Included, therefore, are all possible degrees of transparency, for example veiled or opaque, which non concealing fabrics can take on; included in particular are transparent fabrics, veiled fabrics, also in the same colour, etc., and which optionally have on the surface prints, polka dots, jacquards, appliqués, etc. which do not cause complete covering of said surface.

Said cloths of polymer material can be a fabric of artificial fibre or a fabric of synthetic fibre, preferably of synthetic fibre.

Viscose, rayon, acetate, lyocell etc. can be cited as artificial fibres. Acrylic, polyamide, polyester, polyurethane, Teflon, polyester, polypropylene fibres, etc. can be cited as synthetic fibres.

The transparent outer covering material can be chosen, for example, from polyamide fabrics such as nylon; polyester fabrics; fabrics made of polyurethane fibres, Teflon fibres, acrylic fibres and other polymer materials used in the textile sector. Furthermore, the outer fabric can be a fabric as described above subsequently made hydrophilic by the conventional methods, for example by coating.

Examples of synthetic/artificial transparent fabrics are georgette, organza, chiffon, etc..

Alternatively, the same polymer materials described above can be used for the outer covering but in the nonwoven form (not in the form of woven cloths), for example in the form of sheets or films, preferably chosen from polyamide, polyester, polyurethane, Teflon, and acrylic polymers.

It is also possible, in another embodiment of the invention, to make the inner cloth from a different material from that of the outer cloth, in particular even with a different material from those indicated above for the covering, for example lining material, cotton, etc. This textile material comprising three different layers can be obtained according the process described below.

The multilayer material of the present invention can optionally be in quilted form. This last embodiment is the preferred one.

When the multilayer textile material of the present invention is quilted it can have quilted stitching of different thicknesses or stitches sewn to secure the different materials used in the casing and in the filling. Furthermore said material can also be presented as a quilt of different possible sizes.

The final thickness of the multilayer material according to the invention is not binding for the purposes of the present invention but is a function of the final use of the material.

It is also possible to provide for the possible presence of one or more layers of tulle between a cloth and the fibres in order to have a further support for said fibres.

In a preferred embodiment the multilayer quilted material comprises:
- an outer covering (casing) formed by two cloths and essentially transparent formed by a polymer material chosen from an artificial fibre fabric, a synthetic fibre fabric, and a nonwoven polymer material in sheet form, said sheet being chosen from polyamide, polyester, polyurethane, Teflon, and acrylic polymers,
- an inner filling for said casing consisting of textile fibres, natural and/or non natural, preferably natural, in the form of tops and/or web.

One embodiment of the multilayer textile material according to the invention provides for an outer covering (casing) of nylon or polyurethane fabric, and a filling formed of a plurality of layers formed by cashmere fibres in the form of a web, preferably matted, and the multilayer textile material is preferably quilted.

The fibres in the form of tops and/or web are much softer than nonwoven fabrics since the latter are subjected to mechanical cohesioning processes to give them strength. Therefore their use in the preparation of textile materials is advantageous with respect to the use of nonwoven fabrics, even though the type of material of the fibres is the same, for example cashmere.

The multilayer textile material of the present invention can be obtained, for example, by first preparing the casing by coupling of two cloths of the outer material, or by coupling a cloth of the outer material with the cloth of the inner covering material, closing one end of said casing, then filling the casing with tops and/or web, and subsequently closing the other end, after optional pressing of the material to remove air.

At the end of this stage a non-quilted, three-layered textile material is obtained, which is a precursor of the quilted textile material of the present invention.

Filling of the casing with fibres in the form of tops and/or web can take place, for example, by housing said tops and/or web between two cardboard sheets so as to keep them in the form of a flat web, subsequently removing said cardboard sheets.

The material obtained in the preceding stage is then preferably subjected to quilting, giving rise to the quilted textile material of the present invention.

Once the three-layered quilted material has been obtained as described above, it is possible, after quilting, to carry out a subsequent stage of matting treatment, chosen from:
- washing in hot water, for example 70°C, to mat the filling, preferably when the filling is in the form of a web; or
- dying to obtain colouring both of the filling and of the outer casing if these are initially colourless.

The dying stage is preferable when the filling has a neutral colour but it is required to be coloured: in fact with a single operation it is possible to obtain simultaneously a matted and coloured filling.

At the end of this stage a three-layered quilted material is obtained whose inner filling is tops and/or a web of matted fibres.

This textile material in which the filling is matted presents the same technical qualities as the non matted material such as high heat insulating capacity, minimal bulk, non puffed-up appearance and water repellence, but a slightly different appearance.

Once the filling has been matted, it is then possible, if water repellence is not required, to remove the outer layer (cloth) of the casing in order to give a more different appearance with respect to the non matted precursor material, though without changing the heat insulating capacity, the minimal bulk, and the non puffed-up appearance. This textile material is essentially at least two-layered.

Alternatively, it is also possible after quilting and matting to eliminate the inner layer (cloth), obtaining the two-layered textile material of the present invention.

Therefore, starting from the final three-layered product following matting, the outer layer, or the inner layer, can also be removed, there thus remaining the matted webs and/or tops exposed to view and touch. The outer and inner layers (cloths) which contain the fibres initially form part of the fabric (quilt) and are essential as a container to obtain compactness and formation of the fabric of the present invention.

The multilayer material of the present invention is suitable to be used as textile material in various sectors. For example in the clothing sector for manufacturing outerwear (down jackets or jackets), knitwear, shirts, bags, etc.; in the furnishing sector, for example, for covering sofas, chairs, headboards of beds, etc.; in the household linen sector for manufacturing, for example, bed quilts, etc.; and likewise in the underwear sector. Furthermore said multilayer material can be used in the automotive industry, for example for covering car seats.

The multilayer material of the present invention proves to have the advantage of being softer and lighter than fabrics of the prior art with the same performance, for example heat insulation, thanks to the use of fibres in the form of tops and/or web, also in matted form. Furthermore said filling does not require anti-allergenic treatments as duck down does. In addition said multilayer material does not show loss of fibre fibrils, and is not bulky because it does not present a "puffed up" look.

In addition, when the inner filling is coloured, the contrast between the transparent outer covering and the inner material also makes the multilayer textile material highly aesthetically pleasing.

If the aesthetic appearance is unimportant for the purposes of the end use, it is possible to use the multilayer textile material as above defined wherein the outer casing is made from the same materials indicated above for the casing but opaque and not transparent.

Numerous changes and modifications of detail within the reach of a person skilled in the art can be made to the present embodiments of the invention without thereby departing from the scope of the invention as set forth in the appended claims.

## Claims

1. Multilayer textile quilted material comprising:
- an outer covering (casing) consisting of two cloths, substantially transparent or opaque and not transparent, formed by a polymer material chosen from a fabric made of artificial fibres, a fabric made of synthetic fibres, and a nonwoven polymer material in sheet form, said sheet being chosen from polyamide, polyester, polyurethane, Teflon and acrylic polymers,
- an inner filling for said casing composed of textile fibres, natural and/or non-natural, in the form of "tops" and/or a carded web, said filling being sandwiched between two cloths.

2. Material as claimed in claim 1, wherein the natural fibre of the inner filling is chosen from sheep wool, goat wool and cotton, preferably from Geelong wool, merino wool and cashmere.

3. Material as claimed in any one of the preceding claims, wherein the filling fibres are artificial fibres, preferably viscose, or synthetic fibres.

4. Material as claimed in any one of the preceding claims, wherein "tops" and/or a carded web of a mixture of two or more fibres, natural and/or non-natural, are utilised in an intimate mixture.

5. Material as claimed in any one of the preceding claims, wherein the filling is composed of a plurality of carded webs of fibres, the same as or differing from one another, positioned one on top of another in a plurality of layers.

6. Material as claimed in any one of the preceding claims, wherein the "tops" and/or carded web are coloured or take their natural colour.

7. Material as claimed in any one of the preceding claims, wherein the outer polymer material is chosen from polyamide fabrics such as nylon; polyester fabrics, optionally coated with polyurethane resins, fabrics made of polyurethane fibres, Teflon fibres, acrylic fibres and other polymer materials used in the textile sector, said outer fabric being optionally hydrophilic

8. Material as claimed in any one of the preceding claims wherein the inner cloth of the casing is a made of different material from the outer cloth, preferably lining material or cotton.

9. Process to prepare the multilayer material as defined in claims 1-8, comprising preparation of the casing by coupling two cloths of the outer covering material, closing one end of the casing, filling the casing with "tops" and/or carded webs of fibres, subsequently closing the other end, after optional pressing of the multilayer obtained to remove air, and quilting of the material obtained in the preceding stage.

10. Process as claimed in claim 9 further comprising a stage of matting treatment of the covering by hot washing and/or dying, after quilting.

11. Multilayer quilted textile material as defined in any one of claims 1 to 8 wherein the inner filling is matted in accordance with claim 10.

12. Use of the multilayer textile material as claimed in any one of the preceding claims in the clothing sector, preferably for the manufacture of outerwear (padded coats or jackets), knitwear, shirts, bags, etc.; in the accessories sector; in the furnishing sector, preferably for covering sofas, chairs, bed headboards, etc.; in the household linen sector, preferably for the manufacture of bed quilts, etc.; in the underwear sector, in the automotive sector, preferably for covering car seats.

13. Articles as claimed in claim **12** comprising the textile material as claimed in any one of claims 1 to **11.**

## Patentansprüche

1. Mehrschichtigen gesteppte Textilmaterial, umfassend:
- Eine äußere Abdeckung (Gehäuse), die aus zwei Lappen, im Wesentlichen transparent oder undurchsichtig und nicht transparent sind, mit einem Polymermaterial, ausgewählt aus einem Gewebe aus Kunstfasern, ein Gewebe aus synthetischen Fasern und einem nicht gewebten Polymermaterial in Form von Folie hergestellt gewählt gebildet, die Folie aus Polyamid, Polyester, Polyurethan, Teflon und Acrylpolymeren gewählt wird;
- eine innere Füllung für das Gehäuse aus textilen Fasern, natürliche und / oder nicht-natürliche, in Form von "Spitzen" und / oder einer kardierten Bahn besteht, wobei die Füllung zwischen zwei Tüchern angeordnet.

2. Material nach Anspruch 1, wobei die Naturfaser der inneren Füllung aus Schafwolle, Ziegenwolle und Baumwolle, vorzugsweise von Geelong Wolle, Merino-Wolle und Kaschmir gewählt wird behauptet.

3. Material nach einem der vorhergehenden Ansprüche, wobei die Füllung Fasern sind Kunstfasern, vorzugsweise Viskose oder synthetischen Fasern.

4. Material nach einem der vorhergehenden Ansprüche, wobei "Spitzen" und / oder eine kardierte Bahn aus einem Gemisch aus zwei oder mehr Fasern, natürliche und / oder nicht-natürliche, in einem innigen Gemisch verwendet.

5. Material nach einem der vorhergehenden Ansprüche, wobei die Füllung aus einer Vielzahl von kardierten Bahnen aus Fasern, die gleich oder verschieden voneinander aufgebaut ist, angeordnet eine über der anderen in einer Vielzahl von Schichten.

6. Material nach einem der vorhergehenden Ansprüche, bei der die "Spitzen" und / oder kardierte Bahn gefärbten oder nehmen ihre natürliche Farbe.

7. Material nach einem der vorhergehenden Ansprüche, wobei die äußere Polymermaterial aus Polyamid-Geweben, wie beispielsweise Nylon ausgewählt ist; Polyestergewebe, wahlweise mit Polyurethanharzen, Gewebe aus Polyurethan-, Teflon-Fasern, Acryl-Fasern und anderen polymeren Materialien beschichtet verwendet in der Textil-Branche, wobei die äußere Stoff ist gegebenenfalls hydrophile.

8. Material nach einem der vorhergehenden Ansprüche, wobei das innere Tuch des Gehäuses ist dadurch eine der anderen Material als die Außenstoff, vorzugsweise aus Auskleidungsmaterial oder Baumwolle.

9. Verfahren zur Herstellung des mehrschichtigen Materials nach einem der Ansprüche 1-8 definiert, umfassend Herstellung der Gehäuse durch Verbinden von zwei Tüchern des äußeren Deckmaterial, die ein Ende des Gehäuses, Füllen des Gehäuses mit "Spitzen" und / oder kardierten Vliesen aus Fasern anschließend Schließen des anderen Endes nach der eventuellen Betätigung des mehrschichtigen erhalten, um Luft zu entfernen, und Steppung des Materials in der vorhergehenden Stufe erhaltenen.

10. Verfahren nach Anspruch 9, ferner umfassend eine Stufe der Behandlung der Matte Abdeckung durch Heißwäsche und / oder sterben nach Steppung.

11. Mehrschichtigen gesteppte Textilmaterial nach einem der Ansprüche 1 bis 8 definiert, wobei die innere Füllung nach Anspruch 10 mattiert.

12. Verwendung des mehrschichtigen Textilmaterial, wie in einem der vorhergehenden Ansprüche in der Bekleidungsbranche, vorzugsweise für die Herstellung von Oberbekleidung (gepolsterte Mäntel oder Jacken), Strickwaren, T-Shirts, Taschen, etc. behauptet, im Bereich Zubehör, in der Ausstattung Sektor, vorzugsweise zur Abdeckung von Sofas, Stühle, Bettkopfteile , etc.; in der Haushaltswäsche-Sektor, vorzugsweise für die Herstellung von Bettdecken, etc.; im Wäschebereich, im Automobilbereich, vorzugsweise zur Abdeckung Autositze.

13. Artikel nach Anspruch 12, umfassend das Textilmaterial nach einem der Ansprüche 1 bis 11 beansprucht.

## Revendications

1. Matériau matelassé textile multicouche comprenant:
- Une enveloppe extérieure (gaine) constitué de deux nappes, sensiblement transparents ou opaques et non transparentes, formées par un matériau polymère choisi à partir d'un tissu en fibres artificielles, un tissu fait de fibres synthétiques, et d'un matériau polymère non tissé sous forme de feuille, ladite feuille étant choisie parmi le polyamide, le polyester, le polyuréthane, le Téflon et les polymères acryliques,
- Un remplissage interne pour ladite gaine composée de fibres textiles, naturelles et / ou non naturelles, sous forme de "tops" et / ou de nappe cardée, ledit remplissage étant pris en sandwich entre deux tissus.

2. Matériau selon la revendication 1, dans lequel la fibre naturelle de la garniture Interne est choisie parmi la laine de mouton, la laine de chèvre et le coton, de préférence de laine Geelong, laine mérinos et cachemire.

3. Matériau selon l'une quelconque des revendications précédentes, dans lequel les fibres de remplissage sont des fibres artificielles, de préférence la viscose, ou des fibres synthétiques.

4. Matériau selon l'une quelconque des revendications précédentes, dans lequel "tops" et / ou une nappe cardée d'un mélange de deux ou plusieurs fibres, naturelles et / ou non naturel, sont utilisés dans un mélange intime.

5. Matériau selon l'une quelconque des revendications précédentes, dans lequel la garniture est composée d'une pluralité de voiles cardés de fibres, le même ou différent de l'autre, placés l'un au-dessus de l'autre dans une pluralité de couches.

6. Matériau selon l'une quelconque des revendications précédentes, dans lequel les "tops" et / ou la nappe cardée sont colorés ou prennent leur couleur naturelle.

7. Matériau selon l'une quelconque des revendications précédentes, dans lequel le matériau de polymère extérieur est choisi parmi les tissus de polyamides comme le nylon, les tissus de polyester, éventuellement revêtus de résines de polyuréthane, des tissus en fibres de polyuréthane, fibres de Téflon, de fibres acryliques et d'autres matériaux polymères utilisés dans le secteur textile, ledit tissu extérieur étant éventuellement hydrophile.

8. Matériau selon l'une quelconque des revendications précédentes, dans lequel le tissu interne de la gaine est constitué d'un matériau différent du tissu extérieur, matière de doublure ou coton de préférence.

9. Procédé pour préparer le matériau multicouche tel que défini dans les revendications 1 à 8, comprenant la préparation de la gaine par couplage de deux nappes du matériau de revêtement extérieur, en fermant une extrémité de la gaine, le remplissage de la gaine avec des "tops" et / ou les nappes cardées de fibres en fermant ensuite l'autre extrémité, après pressage en option de l'empilement obtenu à éliminer l'air, et le matelassage du matériau obtenu à l'étape précédente.

10. Procédé selon la revendication 9, comprenant en outre une étape de matage de traitement du revêtement par un lavage à chaud et / ou la mort, après le matelassage.

11. Matériau textile matelassé multicouche tel que défini dans l'une quelconque des revendications 1 à 8, dans lequel la garniture intérieure est emmêlé selon la revendication 10.

12. L'utilisation du matériau textile multicouche selon l'une quelconque des revendications précédentes dans le secteur de l'habillement, de préférence pour la fabrication de vêtements de dessus (manteaux ou vestes matelassées), tricots, chemises, sacs, etc., dans le secteur des accessoires, dans le secteur de l'ameublement, de préférence pour couvrir canapés, chaises, têtes de lit, etc., dans le secteur du linge de maison, de préférence pour la fabrication de couettes de lit, etc., dans le secteur de sous-vêtements, dans le secteur de l'automobile, de préférence pour la couverture des sièges de voiture.

13. Articles selon la revendication 12, comprenant le matériau textile selon l'une quelconque des revendications 1 à 11.
